# EUROPEAN PATENT SPECIFICATION

(11) **EP 3 212 013 B1**
(45) Date of publication and mention of the grant of the patent: **08.05.2019**
(21) Application number: 15791017.5
(22) Date of filing: 26.10.2015
(51) Int. Cl.: A24C 5/32, B65B 19/10

(54) **A ROD ARTICLE DISTRIBUTION APPARATUS**
VERTEILER FÜR STANGENARTIKEL
APPAREIL DE DISTRIBUTION D'ARTICLES EN FORME DE TIGES

(30) Priority: 29.10.2014 GB 201419197
(43) Date of publication of application: 06.09.2017
(73) Proprietor: British American Tobacco (Investments) Ltd, London, WC2R 3LA (GB)
(72) Inventor: FALLON, Gary, London WC2R 3LA (GB)
(74) Representative: Grey, Ian Michael
(86) International application number: PCT/GB2015/053198
(87) International publication number: WO 2016/067000

(56) References cited:
- EP-A1- 0 599 162
- EP-A1- 0 867 127
- EP-A1- 1 561 386
- WO-A1-95/21771
- US-A1- 2005 077 149

## Description

### Field of the Invention

The present invention relates to a rod article distribution apparatus. The present invention also relates to a rod article making apparatus and a method of distributing rod articles between at least two storage columns.

### Background

During the manufacture of fragile rod articles, it is known to pass them along a conveyor drum arrangement. However, it is known to be difficult to remove them from a high-speed manufacturing path without causing damage to the rod articles. Furthermore, such rod articles need to be distributed for storage without creating defects in the rod articles.

### Summary

It is known from US2005/077149A1 to provide a rod article distribution apparatus for distributing rod articles between at least two storage columns comprising a rod article infeed, a rod article distributor having an epicyclic drum arrangement, and at least two rod article receiving channels, the rod article distributor being configured to distribute rod articles between the at least two rod article receiving channels.

A rod article distribution apparatus according to the present invention is characterised in that the at least two rod receiving channels form a rod article transfer feed configured to align and feed rod articles into corresponding at least two storage columns of a rod storage unit.

The rod article distributer may be configured to drop rod articles into each of the at least two rod receiving channels.

The rod article distribution apparatus may further comprise a rod storage unit having at least two storage columns, wherein the pitch of the at least two storage columns of the rod storage unit corresponds to the pitch of the at least two rod receiving channels.

The rod receiving channels may extend substantially parallel to each other.

The epicyclic drum arrangement may comprise a sun drum, a rotational annular carrier around the sun drum, the annular carrier and the sun drum being rotatable about a common axis, and planetary drums rotatable about their own axis, the planetary drums being on the rotational annular carrier.

The sun drum may rotate at a higher speed than the annular carrier.

The planetary drums may have a tangential speed that equals a tangential speed of the carrier.

The sun drum may comprise an outer circumferential surface formed with grooves for receiving rod articles and the grooves may be evenly spaced apart from one another in a direction about the common axis.

The rod article infeed may comprise an infeed drum configured to supply rod articles to the sun drum.

The sun drum may comprise a cam arrangement so as to enable rod articles to be received by the sun drum from the rod article infeed.

The sun drum may comprise segments movable relative to one another in a direction parallel to the common axis.

The segments may be movable relative to one another so as to enable rod articles to be received by the sun drum from the rod article infeed.

The rod article distributor may be configured to pass rod articles along a path so that the longitudinal axis of each rod article is aligned substantially vertically.

According to another aspect of the present invention, there is provided a rod article making apparatus comprising a rod article distribution apparatus according to the invention.

According to another aspect of the present invention, there is provided a method of distributing rod articles between at least two storage columns, comprising distributing rod articles from a rod article infeed between at least two rod article receiving channels using a rod article distributor having an epicyclic drum arrangement, said rod article receiving channels forming a rod article transfer feed configured to align and feed rod articles into corresponding at least two storage columns of a rod storage unit.

The method may further comprise picking up rod articles on a sun drum of the epicyclic drum arrangement, and using planetary drums of the epicyclic drum arrangement to decelerate the rod articles to allow them to be dropped into each of the at least two rod receiving channels.

The method may further comprise rotating the planetary drums about their own axis and about an axis of a carrier supporting the planetary drums, and rotating the sun drum at a speed higher than the rotational speed of the carrier.

### Brief Description of the Drawings

Embodiments of the invention will now be described, by way of example only, with reference to the accompanying drawings in which:
Figure 1 is a front view of a part of a rod article distribution apparatus according to the present invention; and
Figure 2 is a perspective view of the rod article distribution apparatus shown in Figure 1.

### Detailed Description

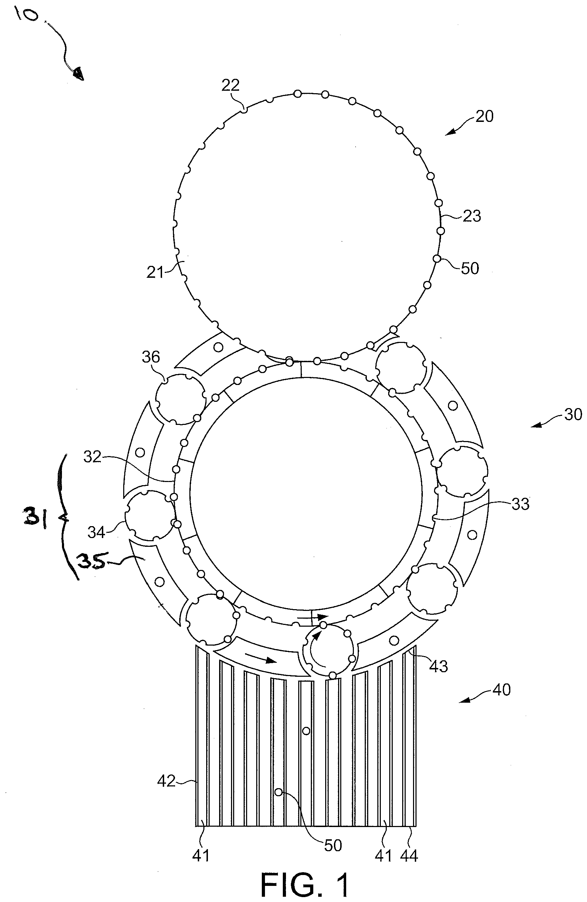

Referring now to the drawings, Figure 1 shows a part of a rod article distribution apparatus 10. The rod article distribution apparatus 10 comprises a rod article infeed 20, a rod article distributor 30, and a rod article transfer feed 40.

The rod article distributor 30 has an epicyclic drum arrangement 31. The rod article distributor 30 is used for transferring rod articles towards a subsequent storage stage where rod articles 50 can be stored. The rod article distribution apparatus 10 defines a rod article distribution path. The rod article distribution apparatus 10 is usable with fragile and/or brittle rod articles 50, such as those formed from or including glass. Rod articles 50 are elongate cylindrical articles, typically having a diameter of less than or equal to 10mm. The rod articles have a longitudinal axis.

The rod articles 50 may be elements forming a tobacco industry product or forming part of a tobacco industry product. A tobacco industry product refers to any item made in, or sold by the tobacco industry, typically including a) cigarettes, cigarillos, cigars, tobacco for pipes or for roll-your-own cigarettes, (whether based on tobacco, tobacco derivatives, expanded tobacco, reconstituted tobacco or tobacco substitutes); b) non-smoking products incorporating tobacco, tobacco derivatives, expanded tobacco, reconstituted tobacco or tobacco substitutes such as snuff, snus, hard tobacco, and tobacco heating devices including those tobacco heating devices in which glass fibre is wrapped around a charcoal element; and c) other nicotine-delivery systems such as inhalers, aerosol generation devices including e-cigarettes, lozenges and gum. This list is not intended to be exclusive, but merely illustrates a range of products which are made and sold in the tobacco industry.

In particular, the rod articles 50 may be elements forming a smoking article or forming part of a smoking article. Rod articles 50 forming part of a smoking article may be elements for inclusion in a filter, in a tobacco rod, or in another part of the smoking article. As used herein, the term "smoking article" includes smokeable products such as cigarettes, cigars and cigarillos whether based on tobacco, tobacco derivatives, expanded tobacco, reconstituted tobacco or tobacco substitutes and also tobacco heating devices and other nicotine delivery product such as aerosol generation devices including e-cigarettes. The smoking article may be provided with a filter for the gaseous flow drawn by the smoker.

The rod articles 50 may be formed from different materials, or a combination of materials, for example glass, ceramic, and carbon.

The rod article infeed 20 comprises an infeed drum 21. The infeed drum 21 is a rotatable drum, also known as a roller. The infeed drum 21 is rotatable about a central axis. The infeed drum 21 is fed rod articles 50 by known means. For example, the infeed drum 21 may be supplied rod articles 60 from a conveyor drum arrangement (not shown). The conveyor drum arrangement may enable the manufacture of rod articles 50.

The infeed drum 21 comprises a number of grooves 22 for receiving rod articles 50. The grooves 22 extend axially on an outer circumferential surface 23 of the infeed drum 21. The rod articles 50 are held in the grooves 22 by negative air pressure. The rod articles 50 are released from the grooves 22 by removing the negative air pressure or by applying a positive air pressure. The air pressure differential is applied through one or more air vents (not shown) at the surface of the grooves 22.

The infeed drum 21 causes rod articles 50 received in grooves 22 to travel in a direction transverse to their longitudinal axis. That is, the rod articles 50 move in a direction which is perpendicular or substantially perpendicular to their longitudinal axis. The grooves 23 are evenly spaced apart from one another in a direction about the central axis.

The rod article infeed 20 conveys the rod articles 50 to the rod article distributer 30. Although in the present embodiment the rod article infeed 20 is the infeed drum 21, it should be understood that alternative arrangements are possible. In an alternative embodiment, the rod article infeed 20 comprises a conveyor belt or other means for transporting the rod articles to the rod article distributer 30. The rod article infeed 20 transfers the rod articles 50 from the conveyor drum arrangement (not shown) to the rod article distributer 30. That is, the point at which they are received from the conveyor drum arrangement to a point at which the infeed drum 21 meets a sun drum 32 of the epicyclic drum arrangement 31. At this point, the rod articles 50 on the infeed drum 21 are fed into corresponding grooves 33 of the sun drum 32.

The epicyclic drum arrangement 31 comprises the sun drum 32, planetary drums 34, and a rotatable annular carrier 35. The sun drum 32 forms a central drum. The planetary drums 34 are disposed in a circumferential arrangement around the sun drum 32. The planetary drums 34 are supported by the carrier 35. The carrier 35 is rotatable about a central axis. The sun drum 32 is disposed within the carrier 35 and is rotatable about the same common axis as the carrier 35.

A circumferential outer surface of the sun drum 32 is facing an inner surface of the carrier 35. The circumferential outer surface of the sun drum 32 is formed with the grooves 33 extending parallel to the common axis about which the sun drum 32 is rotatable. In the particular embodiment shown in Figure 1, the circumferential outer surface of the sun drum 32 is formed with thirty grooves 33. The number of grooves 33 may differ. Each groove 33 may carry a single rod article 50. The rod articles 50 are held in the grooves 33 by suction being applied to the rod articles 50 through valve-operated holes (not shown) formed at the grooves 33. The thirty grooves 33 are equally spaced apart from one another in a rotational direction about the common axis. However this arrangement is optional, as in an alternative embodiment the grooves 33 are formed into groups such that the outer surface of the sun drum 32 is formed with a single or multiple group(s) of grooves.

In the embodiment shown in the figures, there are eight planetary drums 34 supported by a rotatable annular carrier 35. Although eight planetary drums 34 are shown, it should be understood that the number of planetary drums 34 may differ. Each planetary drum 34 is rotatable about their own central axis in a clockwise direction, and the carrier 35 is rotated about its central axis in an anti-clockwise direction. Each planetary drum 34 has six grooves 36 and each groove 36 is configured to receive at least one rod article 50 from one of the corresponding grooves 22 on the sun drum 32. The number of grooves 36 may differ. The grooves 36 on each planetary drum 34 are equally spaced apart from one another in a rotational direction about the planetary drum's central axis. The spacing of the grooves 36 on each planetary drum 34 corresponds to the spacing of the grooves 33 on the sun drum 32. The rod articles 50 are held in the grooves 36 by suction being applied to the rod articles 50 through valve-operated holes (not shown) formed in the grooves 36.

The rod article transfer feed 40 comprises nine channels 41. The channels 41 are spaced from each other. The channels 41 are formed by vanes 42. The channels 42 are configured to allow rod articles 50 to pass therealong. Each channel 41 has a width corresponding to one rod article 50, however this is optional. The channels 42 are elongate and are arranged to extend vertically. Each channel 42 has an inlet 43. The inlet 43 is configured to received rod articles 50. The inlet 43 receives rod articles 50 from the rod article distributor 30. The rod article transfer feed 40 is disposed below the rod article distributor 30. That is, rod articles 50 carried by the rod article distributor 30 are able to fall to the rod article transfer feed 40. The inlet 43 of each channel 42 is configured to receive rod articles 50 from the grooves 36 on each planetary drum 34. Each channel 42 has an outlet 44. Each outlet 44 is configured to align with corresponding storage columns (not shown) of a rod storage unit (not shown). Rod storage units are positionable below the outlets 44 of the rod article transfer feed 40. The channels 41 are configured to feed rod articles 50 into the corresponding storage columns.

The rod storage units (not shown), also called trays, comprise opposing side walls (not shown) and dividers (not shown) extending between the side walls. The dividers define the storage columns. The storage columns extend parallel to each other. An upper end of the rod storage unit is open so as to be able to receive rod articles 50 therethrough. The pitch of the channels 41 of the rod article transfer feed 40 corresponds to the pitch of the storage columns of the rod storage units. Therefore, the channels 41 of the rod article transfer feed 40 are alignable with the storage columns of the rod storage units. When one of the rod articles 50 is fed from the outlet 44 of one of the channels 42 it is receivable in a corresponding storage column aligned therewith.

Rod articles 50 are transferred from the grooves 22 on the infeed drum 21 onto the grooves 33 of the sun drum 32, and then onto the grooves 36 of the planetary drums 34. The rod articles 50 are then transferred to the channels 41 of the rod article transfer feed 40. The tangential speed of the sun drum 32 corresponds to the tangential speed of the infeed drum 21. The infeed drum 21 rotates in a clockwise direction. The sun drum 32 rotates in an anti-clockwise direction. The sun drum 32 is continuously supplied with rod articles 50 from the infeed drum 21.

The rotation of the planetary drums 34 as they rotate about their own axis corresponds to the rotation of the sun drum 32 such that rod articles 50 in the grooves 33 of the sun drum 32 are transferred to the grooves 36 of the planetary drums 34. The sun drum 32 is configured to rotate at a higher angular speed than the carrier 35. The tangential speed of the planetary drums 34 as they rotate about their own axis equals the tangential speed of the carrier 35 rotating in the opposite direction such that a rod article 50 is released and falls into one of inlets 43 of the channels 41. Therefore, rod articles 50 are transferred from a high tangential speed along a rotational path to a reduced speed along a linear path. Therefore, the rod articles 50 are decelerated. The rod articles 50 then pass along the channels 41 and into corresponding storage columns (not shown) of the rod storage unit (not shown). It should be understood that the valves of the holes formed in the grooves 22, 33, 36 of the infeed drum 21, sun drum 32 and planetary drums 34 are operated such that vacuum is applied at the correct rotational position so as to allow for rod articles 50 to be picked up, transferred and released as described above.

The rod article distribution apparatus 10 may be supported by a single support, or alternatively, the components of the rod article distribution apparatus 10 may be supported on several separate supports.

The rod article transfer feed 40 is not limited to comprising nine channels 41. It should be understood that the size of each component, the number of channels, planetary drums and their grooves, as well as the number of grooves on the sun drum can be varied so as to suit the desired distribution rate of rod articles, as well as the size of the rod articles being distributed.

The planetary drums 34, carrier 35 and sun drum 32, are operated by a set of gears and shafts (not shown) driven by a driver, such as a motor (not shown). Various gearing/driving arrangements will be evident to those skilled in the art. The rotational movement of the planetary drums 34 as the planetary drums 34 are being rotated by the carrier 35 can be described as an epicyclic motion. In one embodiment, the planetary drums 34, carrier 35 and the sun drum 32 are rotated in the opposite direction to that described above such that the planetary drums 34 have an epicyclic motion in the opposite direction about the common axis.

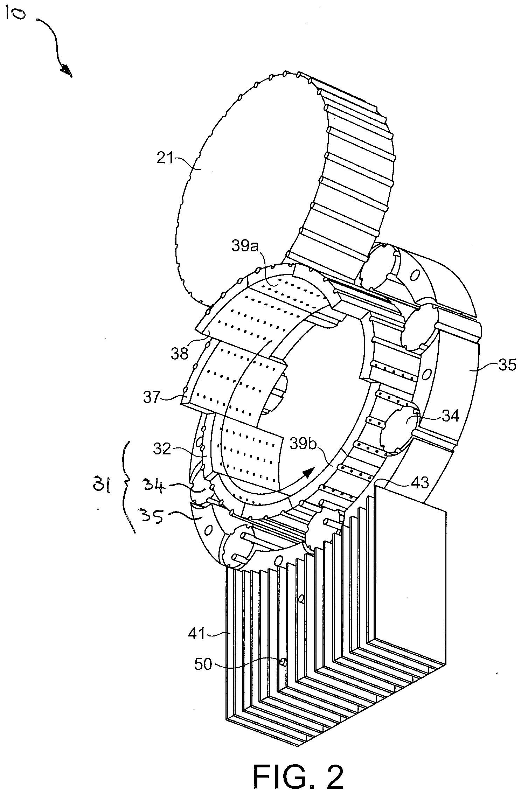

Referring now to Figure 2, the sun drum 32 comprises a cam arrangement 37 configured to provide alignment of rod articles 50 on the infeed drum 32 with grooves 33 of the sun drum 32 so that rod articles 50 on the infeed drum 32 can be transferred to the sun drum 32. In the present embodiment a barrel cam arrangement is used however, it should be understood that alternative arrangements may be used to provide for a similar motion, for example a plate cam arrangement.

In the present arrangement, the sun drum 32 comprises movable segments 38 supported by a stationary barrel (not shown). The barrel is omitted from the Figures so that the segments 38 can be clearly shown. An outer circumferential surface of the barrel is formed with a barrel cam which cooperates with a corresponding cam or track formed on an inner surface of the segments 38 facing the circumferential surface of the barrel. The segments 38 are supported by two ring structures (not shown) located at the end of the segments 38 such that the segments 38 are sandwiched in between the ring structures. The ring structures are formed with pins which locate in holes of the segments. The ring structures are configured to rotate about the common axis and as their pins locate in the segments 38, the segments 38 rotate with the ring structures about said common. The barrel cam cooperating with the cam or track on the inner surface of the segments causes the segments 38 to move relative to one another in a direction parallel to the common axis of the sun drum 32 as the ring structures and the segments 38 are rotated about the barrel. As the segments 38 are rotated about the barrel, the segments 38 are moved from a pick-up position 39a to a drop-off position 39b. The segments 38 are in the pick-up position 39a when they are proximal to the infeed drum 21, and in the drop-off position 39b when they are proximal to the rod article transfer feed 40. The movable segments 38 of the sun drum 32 enables rod articles 50 to be transferred from the infeed drum 21 to the sun drum 32 without the interference of the carrier 35 and/or the planetary drums 34. In particular, the movable segments 38 enable the infeed drum 21 to overlap with the carrier 35 such that the infeed drum 21 engages the sun drum 32.

Operation of the rod article distribution apparatus 10 will now be described in greater detail. The carrier 35 rotates in an anti-clockwise direction and a first planetary drum 34 approaches the set of nine channels 41. As the first planetary drum 34 rotates about its own axis in a clockwise direction rod articles 50 held in the grooves 33 of the sun drum 32 are transferred to the first planetary drum 34 such that a rod article 50 locates in each groove 36 of the first planetary drum 34. As the first planetary drum 34 rotates at a high rotational speed to pick up rod articles 50 it simultaneously drops off rod articles 50 that are aligned with one of the corresponding channels 41 of the rod article transfer feed 40. As the planetary drums 34 are following an orbital path about the common axis, due to rotation of the carrier 35, the rod articles 50 are decelerated and drop into respective channel 41 upon release from the groove 36. As there are nine channels 41, and each planetary drum 34 has six grooves 36, each planetary drum 34 transfers nine rod articles 50 to the rod article transfer feed 40 per rotation of the carrier 35. Thus, the first three grooves 36 of each planetary drum 34 transfer two rod articles 50 in one rotation. The rod articles 50 are then guided by the channels 41 into the corresponding storage columns (not shown) of the rod storage unit (not shown). With this arrangement it is possible to distribute rod articles 50 between multiple storage columns (not shown). This distribution may occur at a rapid pace without exerting a large force on each rod article 50 which may result in damage to the rod articles 50. Furthermore, the epicyclic drum arrangement 31 provides for the rod articles 50 to be rapidly decelerated to a stationary condition from the rotational speed of the infeed drum 21.

In the above described embodiment, the epicyclic drum arrangement 31 is configured to pass rod articles 50 along the rod article distribution path in which the longitudinal axis of each rod article is aligned substantially horizontal as the rod articles 50 pass along the rod article distribution path. With this embodiment, rod articles are fed from each planetary drum 34 to one of the corresponding channels 41 of the rod article transfer feed 40 under gravity. However, it will be understood that the alignment of the epicyclic drum arrangement 31 may differ. For example, in another embodiment, the epicyclic drum arrangement 31 is configured to pass rod articles 50 along a rod article distribution path in which the longitudinal axis of each rod article 50 is aligned substantially vertical as the rod articles 50 pass along the rod article distribution path. In such an embodiment, the rod articles 50 may be transferred to the corresponding channels 41 of the rod article transfer feed 40 using an urging element (not shown). Such an urging element, may include a biasing finger which acts to flick the rod article from it's groove 36 into one of the corresponding channels 41.

In order to address various issues and advance the art, the entirety of this disclosure shows by way of illustration various embodiments in which the claimed invention(s) may be practiced and provide for a superior rod article distribution apparatus. The advantages and features of the disclosure are of a representative sample of embodiments only, and are not exhaustive and/or exclusive. They are presented only to assist in understanding and teach the claimed features. It is to be understood that advantages, embodiments, examples, functions, features, structures, and/or other aspects of the disclosure are not to be considered limitations on the disclosure as defined by the claims, and that other embodiments may be utilised and modifications may be made without departing from the scope of the disclosure. Various embodiments may suitably comprise, consist of, or consist essentially of, various combinations of the disclosed elements, components, features, parts, steps, means, etc.

## Claims

1. A rod article distribution apparatus (10) for distributing rod articles (50) between at least two storage columns comprising
a rod article infeed (20),
a rod article distributor (30) having an epicyclic drum arrangement (31), and
at least two rod article receiving channels (41),
the rod article distributor (30) being configured to distribute rod articles (50) between the at least two rod article receiving channels (41),
**characterised in that** the at least two rod article receiving channels (41) form a rod article transfer feed (40) configured to align and feed rod articles (50) into corresponding at least two storage columns of a rod storage unit.

2. The rod article distribution apparatus (10) according to claim 1, wherein the rod article distributor (30) is configured to drop rod articles (50) into each of the at least two rod receiving channels (41).

3. The rod article distribution apparatus (10) according to claim 2, further comprising a rod storage unit having at least two storage columns, wherein the pitch of the at least two storage columns of the rod storage unit corresponds to the pitch of the at least two rod receiving channels (41).

4. The rod article distribution apparatus (10) according to any preceding claim, wherein the epicyclic drum arrangement (31) comprises a sun drum (32), a rotational annular carrier (35) around the sun drum (32), the annular carrier (35) and the sun drum (32) being rotatable about a common axis, and planetary drums (34) rotatable about their own axis, the planetary drums (34) being on the rotational annular carrier (35).

5. The rod article distribution apparatus (10) according to claim 4, wherein the sun drum (32) rotates at a higher speed than the annular carrier (35).

6. The rod article distribution apparatus (10) according to claim 4 or claim 5, wherein the planetary drums (34) have a tangential speed that equals a tangential speed of the carrier (35).

7. The rod article distribution apparatus according (10) to any of claims 5 to 7, wherein the sun drum (32) comprises an outer circumferential surface formed with grooves (33) for receiving rod articles (50) and the grooves (33) are evenly spaced apart from one another in a direction about the common axis.

8. The rod article distribution apparatus (10) according to any of claims 5 to 8, wherein the rod article infeed (20) comprises an infeed drum (21) configured to supply rod articles (50) to the sun drum (32).

9. The rod article distribution apparatus (10) according to any of claims 4 to 8, wherein the sun drum (32) comprises a cam arrangement (37) so as to enable rod articles (50) to be received by the sun drum (32) from the rod article infeed (20).

10. The rod article distribution apparatus (10) according to any preceding claim, wherein the rod article distributor (30) is configured to pass rod articles (50) along a path so that the longitudinal axis of each rod article (50) is aligned substantially vertically.

11. A rod article making apparatus comprising a rod article distribution apparatus (10) according to any preceding claim.

12. A method of distributing rod articles (50) between at least two storage columns, comprising distributing rod articles (50) from a rod article infeed (20) between at least two rod article receiving channels (41) using a rod article distributor (30) having an epicyclic drum arrangement (31), said rod article receiving channels (41) forming a rod article transfer feed (40) configured to align and feed rod articles (50) into corresponding at least two storage columns of a rod storage unit.

13. The method according to claim 12, comprising picking up rod articles (50) on a sun drum (32) of the epicyclic drum arrangement (31), and using planetary drums (34) of the epicyclic drum arrangement (31) to decelerate the rod articles (50) to allow them to be fed into each of the at least two rod receiving channels (41).

14. The method according to claim 13, comprising rotating the planetary drums (34) about their own axis and about an axis of a carrier (35) supporting the planetary drums (34), and rotating the sun drum (32) at a speed higher than the rotational speed of the carrier (35).

## Patentansprüche

1. Stangenartikelverteilungsvorrichtung (10) zum Verteilen von Stangenartikeln (50) auf wenigstens zwei Lagerungssäulen, die Folgendes umfasst:
eine Stangenartikelzuführung (20),
einen Stangenartikelverteiler (30) mit einer epizyklischen Radanordnung (31) und
wenigstens zwei Stangenartikelaufnahmekanäle (41),
wobei der Stangenartikelverteiler (30) so konfiguriert ist, dass Stangenartikel (50) auf die wenigstens zwei Stangenartikelaufnahmekanäle (41) verteilt werden,
**dadurch gekennzeichnet, dass** die wenigstens zwei Stangenartikelaufnahmekanäle (41) einen Stangenartikeltransfervorschub (40) bilden, der so konfiguriert ist, dass Stangenartikel (50) ausgerichtet und in entsprechende wenigstens zwei Lagerungssäulen einer Stangenlagerungseinheit eingeführt werden.

2. Stangenartikelverteilungsvorrichtung (10) nach Anspruch 1, wobei der Stangenartikelverteiler (30) so konfiguriert ist, dass Stangenartikel (50) in die jeweiligen wenigstens zwei Stangenaufnahmekanäle (41) fallen gelassen werden.

3. Stangenartikelverteilungsvorrichtung (10) nach Anspruch 2, die ferner eine Stangenlagerungseinheit mit wenigstens zwei Lagerungssäulen umfasst, wobei der Abstand der wenigstens zwei Lagerungssäulen der Stangenlagerungseinheit dem Abstand der wenigstens zwei Stangenaufnahmekanäle (41) entspricht.

4. Stangenartikelverteilungsvorrichtung (10) nach einem vorherigen Anspruch, wobei die epizyklische Radanordnung (31) Folgendes umfasst: ein Sonnenrad (32), einen ringförmigen Drehträger (35) um das Sonnenrad (32), wobei der ringförmige Träger (35) und das Sonnenrad (32) um eine gemeinsame Achse drehbar sind, und Planetenräder (34), die um ihre eigene Achse drehbar sind, wobei sich die Planetenräder (34) auf dem ringförmigen Drehträger (35) befinden.

5. Stangenartikelverteilungsvorrichtung (10) nach Anspruch 4, wobei sich das Sonnenrad (32) mit einer höheren Geschwindigkeit dreht als der ringförmige Träger (35).

6. Stangenartikelverteilungsvorrichtung (10) nach Anspruch 4 oder Anspruch 5, wobei die Planetenräder (34) eine Tangentialgeschwindigkeit haben, die einer Tangentialgeschwindigkeit des Trägers (35) entspricht.

7. Stangenartikelverteilungsvorrichtung (10) nach einem der Ansprüche 5 bis 7, wobei das Sonnenrad (32) eine äußere Umfangsfläche umfasst, die mit Nuten (33) zur Aufnahme von Stangenartikeln (50) versehen ist, und die Nuten (33) in einer Richtung um die gemeinsame Achse gleichmäßig voneinander beabstandet sind.

8. Stangenartikelverteilungsvorrichtung (10) nach einem der Ansprüche 5 bis 8, wobei die Stangenartikelzuführung (20) ein Zuführungsrad (21) umfasst, das so konfiguriert ist, dass Stangenartikel (50) dem Sonnenrad (32) zugeführt werden.

9. Stangenartikelverteilungsvorrichtung (10) nach einem der Ansprüche 4 bis 8, wobei das Sonnenrad (32) eine Nockenanordnung (37) umfasst, so dass Stangenartikel (50) von der Stangenartikelzuführung (20) durch das Sonnenrad (32) aufgenommen werden können.

10. Stangenartikelverteilungsvorrichtung (10) nach einem vorherigen Anspruch, wobei der Stangenartikelverteiler (30) so konfiguriert ist, dass Stangenartikel (50) so entlang einem Pfad geführt werden, dass die Längsachse jedes Stangenartikels (50) im Wesentlichen vertikal ausgerichtet ist.

11. Vorrichtung zur Herstellung eines Stangenartikels, die eine Stangenartikelverteilungsvorrichtung (10) nach einem vorherigen Anspruch umfasst.

12. Verfahren zum Verteilen von Stangenartikeln (50) auf wenigstens zwei Lagerungssäulen, das Folgendes beinhaltet:
Verteilen von Stangenartikeln (50) von einer Stangenartikelzuführung (20) auf wenigstens zwei Stangenartikelaufnahmekanäle (41) mit Hilfe eines Stangenartikelverteilers (30) mit einer epizyklischen Radanordnung (31), wobei die genannten Stangenartikelaufnahmekanäle (41) einen Stangenartikeltransfervorschub (40) bilden, der so konfiguriert ist, dass Stangenartikel (50) ausgerichtet und in entsprechende wenigstens zwei Lagerungssäulen einer Stangenlagerungseinheit eingeführt werden.

13. Verfahren nach Anspruch 12, das Folgendes beinhaltet:
Aufnehmen von Stangenartikeln (50) auf einem Sonnenrad (32) der epizyklischen Radanordnung (31) und Verwenden von Planetenrädern (34) der epizyklischen Radanordnung (31), um die Stangenartikel (50) abzubremsen, damit sie in die jeweiligen wenigstens zwei Stangenaufnahmekanäle (41) eingeführt werden können.

14. Verfahren nach Anspruch 13, das das Drehen der Planetenräder (34) um ihre eigene Achse und um eine Achse eines die Planetenräder (34) tragenden Trägers (35) und das Drehen des Sonnenrads (32) mit einer Geschwindigkeit beinhaltet, die höher ist als die Drehzahl des Trägers (35) .

## Revendications

1. Appareil de distribution (10) d'articles en forme de tige servant à distribuer des articles en forme de tige (50) entre au moins deux colonnes de stockage comportant
une alimentation en entrée (20) d'articles en forme de tige,
un distributeur (30) d'articles en forme de tige ayant un agencement de tambours épicycloïdaux (31), et
au moins deux canaux de réception (41) d'articles en forme de tige,
le distributeur (30) d'articles en forme de tige étant configuré pour distribuer des articles en forme de tige (50) entre lesdits au moins deux canaux de réception (41) d'articles en forme de tige,
**caractérisé en ce que** lesdits au moins deux canaux de réception (41) d'articles en forme de tige constituent une alimentation de transfert (40) d'articles en forme de tige configurée pour aligner et alimenter des articles en forme de tige (50) dans au moins deux colonnes de stockage correspondantes d'une unité de stockage de tiges.

2. Appareil de distribution (10) d'articles en forme de tige selon la revendication 1, dans lequel le distributeur (30) d'articles en forme de tige est configuré pour lâcher des articles en forme de tige (50) dans chacun desdits au moins deux canaux de réception (41) de tiges.

3. Appareil de distribution (10) d'articles en forme de tige selon la revendication 2, comportant par ailleurs une unité de stockage de tiges ayant au moins deux colonnes de stockage, dans lequel le pas desdites au moins deux colonnes de stockage de l'unité de stockage de tiges correspond au pas desdits au moins deux canaux de réception (41) de tiges.

4. Appareil de distribution (10) d'articles en forme de tige selon l'une quelconque des revendications précédentes, dans lequel l'agencement de tambours épicycloïdaux (31) comporte un tambour planétaire intérieur (32), un support annulaire de rotation (35) autour du tambour planétaire intérieur (32), le support annulaire (35) et le tambour planétaire intérieur (32) étant rotatifs autour d'un axe commun, et des tambours planétaires extérieurs (34) rotatifs autour de leurs propres axes, les tambours planétaires extérieurs (34) étant sur le support annulaire de rotation (35).

5. Appareil de distribution (10) d'articles en forme de tige selon la revendication 4, dans lequel le tambour planétaire intérieur (32) tourne à une vitesse supérieure par rapport au support annulaire (35).

6. Appareil de distribution (10) d'articles en forme de tige selon la revendication 4 ou la revendication 5, dans lequel les tambours planétaires extérieurs (34) ont une vitesse tangentielle qui est égale à une vitesse tangentielle du support (35).

7. Appareil de distribution (10) d'articles en forme de tige selon l'une quelconque des revendications 5 à 7, dans lequel le tambour planétaire intérieur (32) comporte une surface circonférentielle extérieure formée avec des rainures (33) servant à recevoir des articles en forme de tige (50) et les rainures (33) sont espacées de manière uniforme les unes par rapport aux autres dans une direction autour de l'axe commun.

8. Appareil de distribution (10) d'articles en forme de tige selon l'une quelconque des revendications 5 à 8, dans lequel l'alimentation en entrée (20) d'articles en forme de tige comporte un tambour d'alimentation en entrée (21) configuré pour fournir des articles en forme de tige (50) au tambour planétaire intérieur (32).

9. Appareil de distribution (10) d'articles en forme de tige selon l'une quelconque des revendications 4 à 8, dans lequel le tambour planétaire intérieur (32) comporte un agencement de came (37) de manière à permettre aux articles en forme de tige (50) d'être reçus par le tambour planétaire intérieur (32) en provenance de l'alimentation en entrée (20) d'articles en forme de tige.

10. Appareil de distribution (10) d'articles en forme de tige selon l'une quelconque des revendications précédentes, dans lequel le distributeur (30) d'articles en forme de tige est configuré pour faire passer des articles en forme de tige (50) le long d'une trajectoire de telle sorte que l'axe longitudinal de chaque article en forme de tige (50) est aligné sensiblement à la verticale.

11. Appareil de fabrication d'articles en forme de tige comportant un appareil de distribution (10) d'articles en forme de tige selon l'une quelconque des revendications précédentes.

12. Procédé de distribution d'articles en forme de tiges (50) entre au moins deux colonnes de stockage, comportant l'étape consistant à distribuer des articles en forme de tiges (50) en provenance d'une alimentation en entrée (20) d'articles en forme de tige entre au moins deux canaux de réception (41) d'articles en forme de tige en utilisant un distributeur (30) d'articles en forme de tige ayant un agencement de tambours épicycloïdaux (31), lesdits canaux de réception (41) d'articles en forme de tige formant une alimentation de transfert (40) d'articles en forme de tige configurée pour aligner et alimenter des articles en forme de tige (50) dans au moins deux colonnes de stockage correspondantes d'une unité de stockage de tiges.

13. Procédé selon la revendication 12, comportant les étapes consistant à retirer des articles en forme de tige (50) sur un tambour planétaire intérieur (32) de l'agencement de tambours épicycloïdaux (31), et à utiliser des tambours planétaires extérieurs (34) de l'agencement de tambours épicycloïdaux (31) à des fins de décélération des articles en forme de tige (50) pour leur permettre d'être alimentés dans chacun desdits au moins deux canaux de réception (41) de tiges.

14. Procédé selon la revendication 13, comportant les étapes consistant à faire tourner les tambours planétaires extérieurs (34) autour de leurs propres axes et autour d'un axe d'un support (35) supportant les tambours planétaires extérieurs (34), et à faire tourner le tambour planétaire intérieur (32) à une vitesse supérieure à la vitesse de rotation du support (35).
